# EUROPÄISCHE PATENTSCHRIFT

(11) **EP 1 110 782 B1**
(45) Veröffentlichungstag und Bekanntmachung des Hinweises auf die Patenterteilung: **03.05.2006**
(21) Anmeldenummer: 00127041.2
(22) Anmeldetag: 09.12.2000
(51) Int. Cl.: B60J 7/12, B60J 7/06

(54) **Cabriolet-Fahrzeug mit einem zumindest bereichsweise flexiblen Dach und zumindest einem Querverbindungsträger zu dessen Abstützung**
Convertible vehicle with at least one locally flexible roof and and at least one transverse connector for supporting it
Véhicule convertible avec au moins un toit ayant des regions flexible et au moins un joint perpendiculaire pour le support de celui

(30) Priorität: 24.12.1999 DE 19962994
(43) Veröffentlichungstag der Anmeldung: 27.06.2001
(73) Patentinhaber: Wilhelm Karmann GmbH, 49084 Osnabrück (DE)
(72) Erfinder: Maass, Joachim, 49143 Bissendorf (DE)
(74) Vertreter: Busse & Busse Patentanwälte

(56) Entgegenhaltungen:
- EP-A- 0 887 215
- DE-A- 4 203 228
- DE-A- 19 731 330
- DE-U- 29 807 309
- US-A- 5 938 271

## Beschreibung

Die Erfindung betrifft ein Cabriolet-Fahrzeug nach dem Oberbegriff des Anspruchs 1.

Ein solches Fahrzeug ist aus der gattungsbildenden DE 298 07 309 U1 bekannt.

Bei Cabriolet-Verdecken, die zumindest bereichsweise flexibel sind, wobei seitliche Randbereiche des Verdecks um als Rahmen dienende Längsträgerteile gespannt sind und sich zwischen diesen Längsträgerteilen zumindest ein, in der Regel mehrere Querverbindungsträger, sogenannte Spriegel, erstrecken, ist es erforderlich, die Spriegel in bestimmten Längspositionen im Fahrzeug anzuordnen. Beispielsweise ist es bei mehreren Spriegeln für eine optimale Spannung und Formgebung des Verdecks wünschenswert, den ersten Spriegel hinter einem vorderen, rahmenartigen Dachquerabschluß, der in geschlossener Stellung des Daches mit der Windschutzscheibe verbunden ist, in etwa gleichem Längsabstand zum Dachabschluß wie zum darauffolgenden Spriegel anzuordnen.

Die Spriegel sind gegenüber den seitlichen Längsträgerteilen nach oben gewölbt, um damit die Dachspannung zu ermöglichen. Dadurch kann es beim Einfalten zu Kollisionen der Spriegel verschiedener Dachteile kommen, insbesondere zwischen Spriegeln des ersten, dem Windschutzscheibenrahmen zugewandten Dachteils und denen eines rückseitig daran anschließenden Dachteils.

Der Erfindung liegt das Problem zugrunde, hier eine Verbesserung zu erreichen.

Die Erfindung löst dieses Problem mit den Merkmalen des Anspruchs 1. Weitere vorteilhafte Ausgestaltungen der Erfindung sind in den Ansprüchen 2 bis 6 angegeben.

Durch die Längsverschieblichkeit zumindest eines Spriegels kann dieser so angeordnet sein, daß er im geschlossenen Zustand des Daches eine andere Längsposition bezüglich der seitlichen Längsträgerteile einnimmt als im geöffneten. Dadurch kann er optimal für die Verdeckspannung positioniert sein und dennoch beim Einfalten des Verdecks eine Kollision mit einem eventuellen weiteren Spriegel oder einem festen Dachrahmenteil vermieden werden. Hierzu ist zumindest ein Steuerungsmittel vorgesehen, das in Abhängigkeit des Öffnungs- bzw. Schließzustandes des Daches wirksam ist, beispielsweise vorteilhaft je Seite eine mechanische Zug- und Schubstange. Dadurch ist eine Zwangsverschiebung des Spriegels während des Öffnens oder Schließens des Verdecks bewirkt. Es bedarf keiner zusätzlichen Antriebs- oder Steuerungselemente, die etwa vom Fahrer zu betätigen wären, um damit die Verschiebung des Spriegels zu erreichen. Vielmehr wird bei Öffnung des Verdecks durch das Steuerungsmittel die Verschiebung ebenso zwangsweise durchgeführt wie beim anschließenden Verschließen in die Rückposition.

Die Zug- und Schubstange kann zusätzlich eine seitliche Kraftkomponente abfangen können, etwa wenn zur Vergrößerung der Schulterweite die Bewegung der seitlichen Längsträgerteile nicht nur in Fahrzeuglängsrichtung stattfindet, sondern auch eine Querkomponente aufweist.

Weitere Vorteile und Einzelheiten der Erfindung ergeben sich aus einem in der Zeichnung dargestellten und nachfolgend beschriebenen Ausführungsbeispiel des Gegenstandes der Erfindung. In der Zeichnung zeigt:

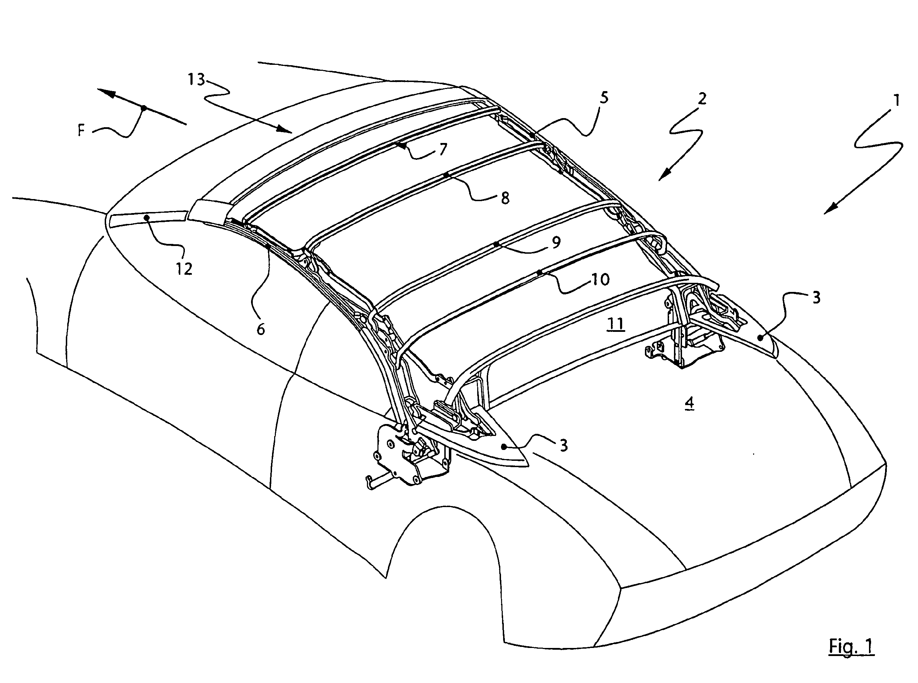

- Fig. 1: ein Verdeckgestell eines erfindungsgemäßen Cabriolet-Fahrzeugs in schematischer Gesamtansicht,
- Fig. 2: einen Ausschnitt des vorderen Bereiches dieses Verdeckgestells in geschlossener Stellung des Daches,
- Fig. 3: den vorderen Bereich nach Fig. 2 aus einer im wesentlichen gegenüberliegenden Ansicht,
- Fig. 4: einen Schnitt entlang der Linie IV-IV in Fig. 2,
- Fig. 5: den vorderen Verdeckgestellbereich während der Verdecköffnung in perspektivischer Ansicht,

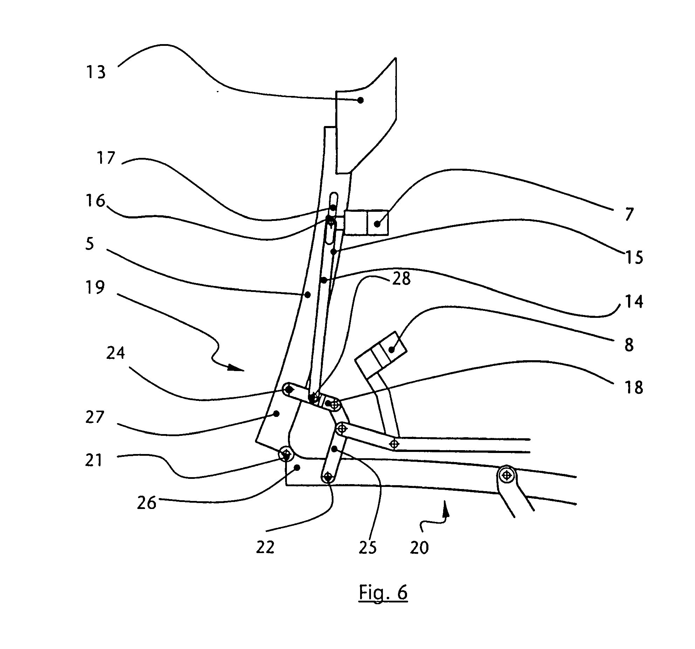

- Fig. 6: den Verdeckgestellbereich nach Fig. 5 in schematisierter Seitenansicht,

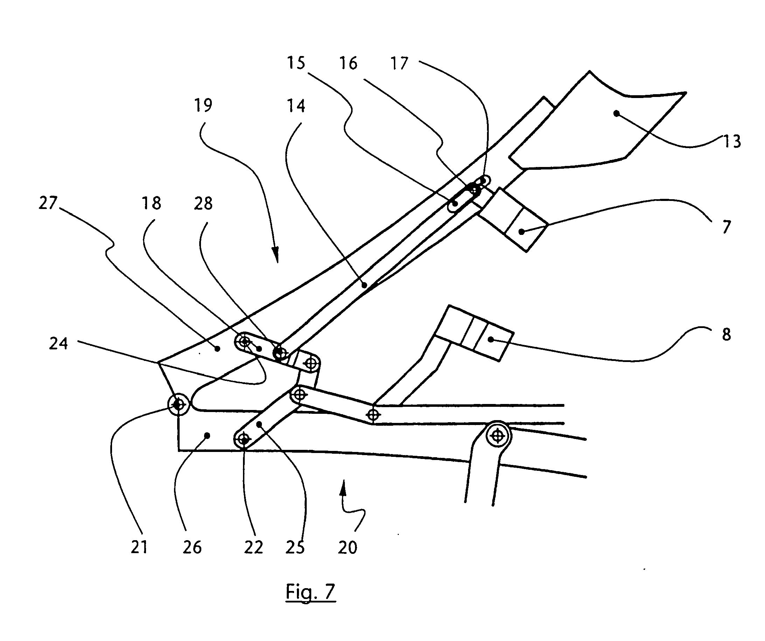

- Fig. 7: eine ähnliche Ansicht wie Fig. 6 bei der weiteren Öffnung des Verdecks,
- Fig. 8: das Verdeckgestell in abgebrochener Darstellung in vollständig geöffneter Stellung,
- Fig. 9: die Stellung des Verdeckgestells nach Fig. 8 in schematisierter Seitenansicht.

Das Cabriolet-Fahrzeug 1 gemäß dem Ausführungsbeispiel weist ein sogenanntes Finnenverdeck 2 auf, d. h., daß im Heckbereich des Verdecks 2 zwei seitliche Spannbügel 3 vorgesehen sind, die jeweils eine in Draufsicht dreiecksförmige Umrißgestalt haben und Teile des Verdeckstoffs - nicht eingezeichnet - auf dem Fahrzeugheck 4 verspannen. Das Verdeck 2 ist hier insgesamt als textiles Faltverdeck ausgebildet, das auf ein mit seitlichen Längsträgerteilen 5 und 6 versehenes Gestänge über Querverbindungsträger 7,8,9 und 10, sogenannte Spriegel, gespannt ist. Es ist auch möglisch, für ein erfindungsgemäßes Cabriolet-Fahrzeug Verdecke vorzusehen, die zumindest bereichsweise starr sind. Bei einem derartigen Cabriolet-Fahrzeug 1, wie hier gezeigt, steht eine Heckscheibe 11 im wesentlichen senkrecht zwischen den Spannbügeln 3 und ist in Fahrtrichtung F diesen vorgeordnet. Auch für herkömmliche Verdecke ist eine erfindungsgemäße Ausbildung unter Umständen sinnvoll.

Das Dach 2 ist im geschlossenem Zustand gegenüber dem Windschutzscheibenrahmen 12 mit einem vorderen Dachquerabschluß 13, beispielsweise einem Plattenteil, angelegt.

Die Spriegel 7,8,9,10 zeigen eine Wölbung und sind derart angeordnet, daß sie sich zumindest im Bereich einer Fahrzeuglängsmittelebene bis oberhalb der seitlichen Längsträgerteile 5,6 erstrecken, um den Verdeckstoff zu spannen und ihm seine bombierte Endgestalt zu geben.

Nach dem Ausführungsbeispiel ist der vordere Spriegel 7, der den ersten Spriegel hinter dem Dachquerabschluß 13 ausbildet, längsverschieblich gegenüber den ihn tragenden Längsträgerteilen 5,6 angeordnet.

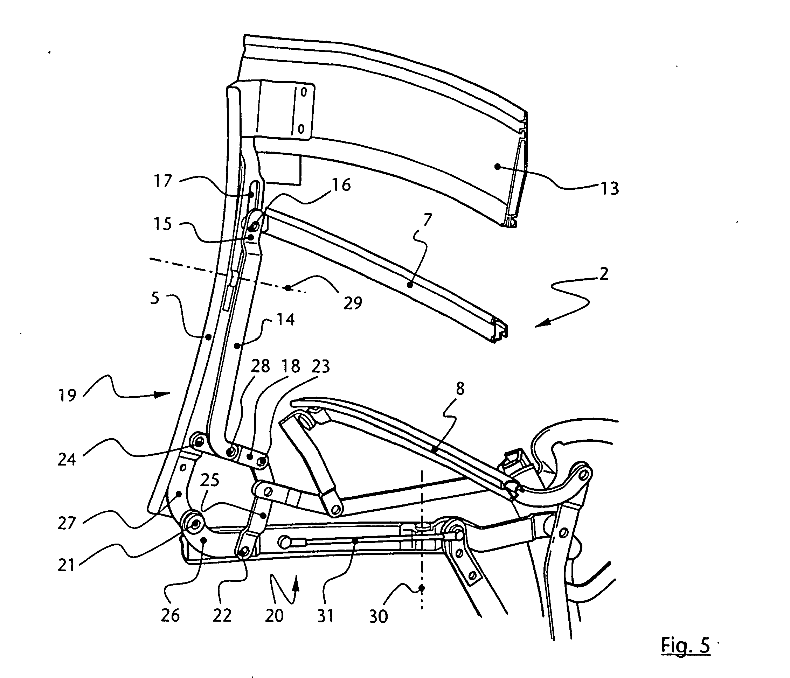

Um die Längsverschiebung zu bewirken, ist ein Steuerungsmittel 14 vorgesehen, beispielsweise ein separater Antrieb, eine Feder oder dergleichen, im Ausführungsbeispiel eine Zug- und Schubstange 14. Diese erstreckt sich bei geschlossenem Verdeck 2 parallel zur Längserstreckung der Längsträgerteile 5,6. Die Zug- und Schubstange 14 ist mit ihrem bei geschlossenem Verdeck 2 in Fahrtrichtung F vorderen Ende 15 auf den Achsstummeln 16 gelagert, mit denen der erste Spriegel 7 in einer seitlichen Führungskulisse 17 gelagert und verschieblich ist. Anderenends ist die Zug- und Schubstange an einem Lenker 18 schwenkbar gehalten, wobei der Lenker 18 Teil eines die ersten beiden Dachteile 19,20 verbindenden Viergelenks 21,22,23,24 ist. Das Viergelenk umfaßt einerseits das die Rahmenteile 5 teilende Hauptgelenk 21 sowie drei weitere Gelenke 22,23 und 24, die zur Verbindung von Lenkern 18,25,26 und 27 dienen. Mit der Öffnung des Verdecks 2 werden die Lenker 18,25,26,27 aus ihrer annähernd parallelen Lage in Schließstellung in eine gegeneinander geöffnete Stellung (Fig. 5) verbracht. Dadurch wird die Anlenkachse 28 der Zug- und Schubstange 14 relativ zum Längsträgerteil 5 in Richtung zum Dachquerabschluß 13 verlagert, so daß das vordere Ende 15 der Schubstange 14 die Achsstummel 16, an denen diese gehalten ist, in der Längsführungskulisse 17 in Richtung auf das vordere Dachende 13 verschiebt.

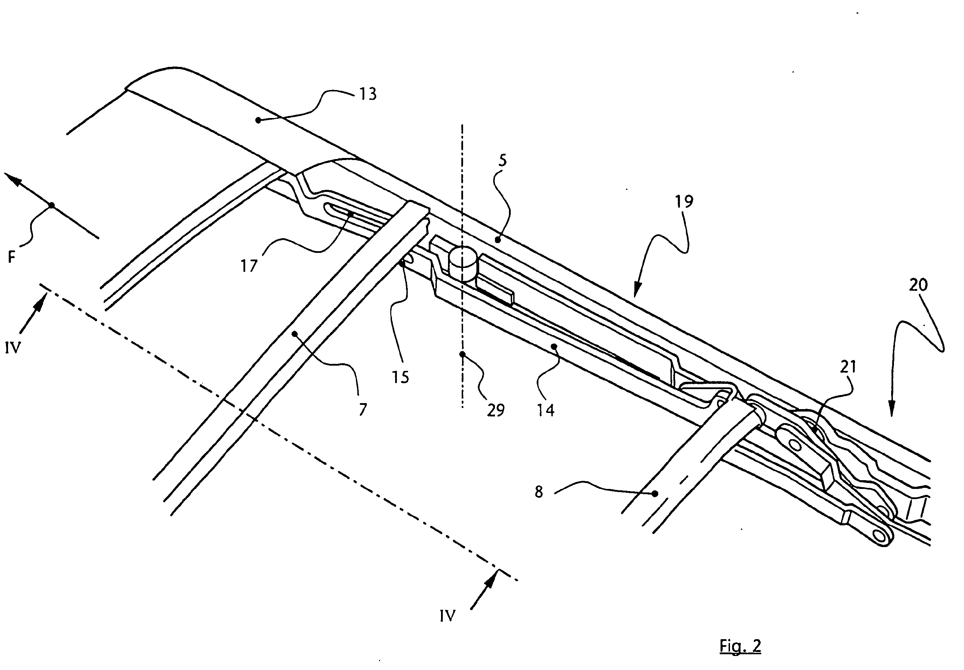

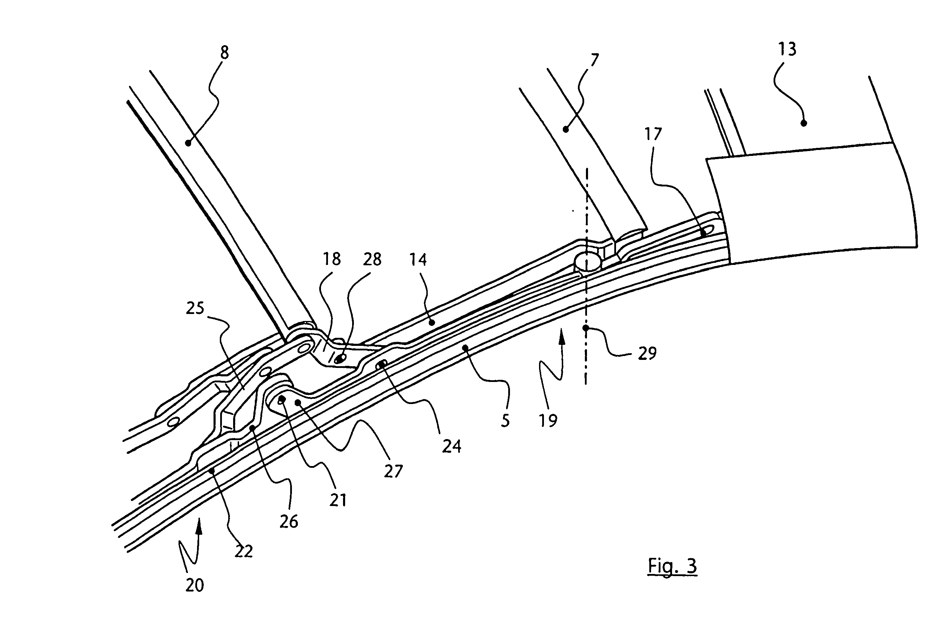

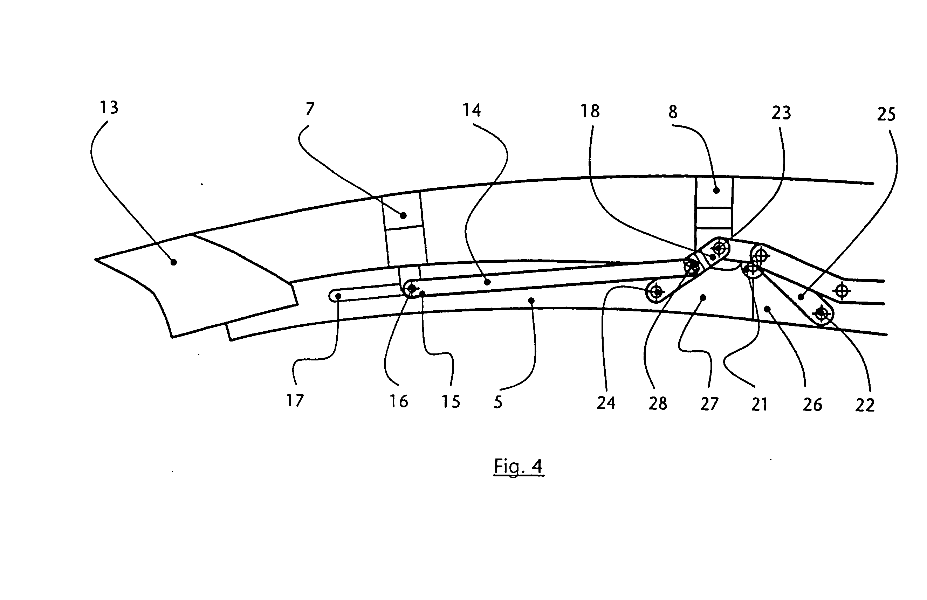

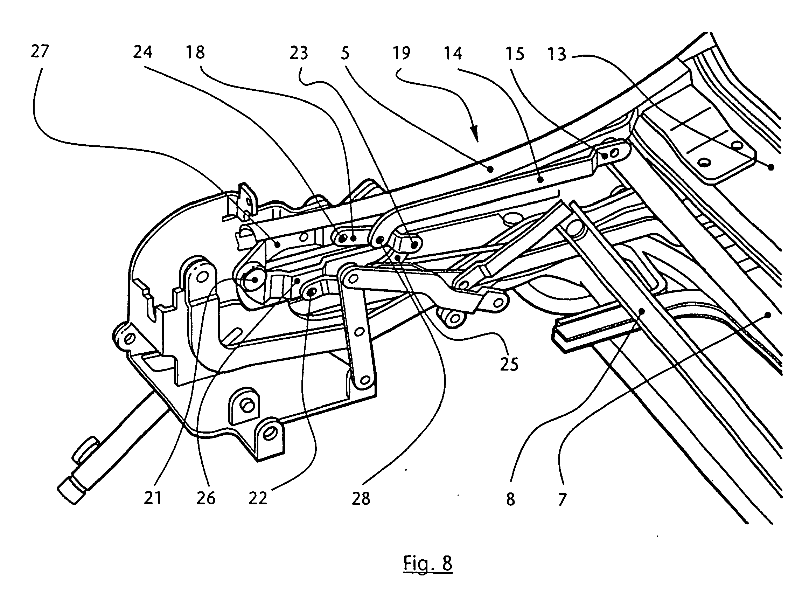

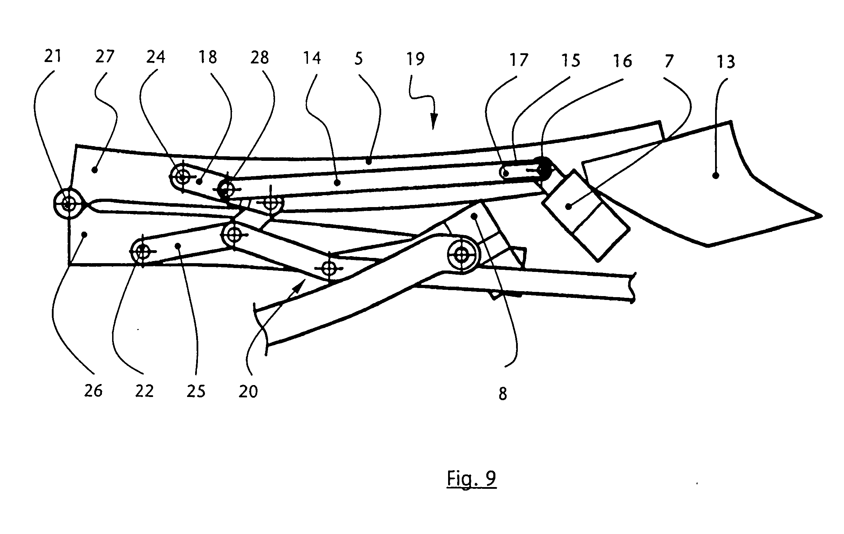

In geschlossener Stellung des Verdecks 2 (Fig. 2 bis 4) sind die Achsstummel 16, mit denen der Spriegel 7 in der Führungskulisse 17 gelagert ist, in ihrer hinteren Endposition befindlich und werden während der Dachöffnung durch die Hebelbewegung des Lenkers 18 und die damit verbundene eingeleitete Schubkraft auf die Zug- und Schubstange 14 in Richtung des vorderen Dachendes 13 verschoben, so daß beim weiteren Aufschwenken schließlich die Achsstummel 16 in ihre vordere Endposition in der Führungskulisse 17 verschoben sind und bei aufgefalteter Lage der vorderen Dachteile 19 und 20 dort stehen. Dadurch wird eine Kollision der Spriegel 7 und 8 vermieden, die, wie in Fig. 8 sichtbar auf diese Weise parallel nebeneinander abgelegt werden und nicht übereinanderliegen bzw. aufeinanderstoßen können. Damit können auch Geometrien von Dächern sichergestellt werden, die hinsichtlich einer geschlossenen Dachposition optimiert sind, jedoch beim Auffalten Probleme bereiten würden, weil eine Übereinanderlagerung der Spriegel zu einer zu großen Bauhöhe führen würde. Es kann sichergestellt sein, daß der Abstand zwischen dem vorderen Spriegel 7 und dem vorderen Dachabschluß 13 nicht wesentlich kleiner ist als zwischen dem vorderen Spriegel 7 und dem weiterfolgenden Spriegel 8. Dennoch kann in abgelegter Stellung des Daches 2 (Fig. 8, Fig. 9) der vordere Spriegel 7 so weit in Richtung des vorderen Dachendes 13 verschoben sein, daß er in Fahrtrichtung F hinter dem darauffolgenden Spriegel 8 abgelegt wird. Eine derartige Längsverschieblichkeit kann auch für mehrere Spriegel 7,8,9,10 vorgesehen sein oder nur für einen Spriegel 8,9,10, der nicht der erste in Fahrtrichtung F sein muß.

Im Ausführungsbeispiel ist zusätzlich zur Längsverschieblichkeit vorgesehen, daß die seitlichen Längsträgerteile 5 und 6 an im wesentlichen senkrecht zu ihrer Erstreckung gelegenen Schwenkachsen 29,30 geteilt sind und über eine weitere Zug- und Schubstange 31 eine während des Öffnens des Daches wirksame Quereinwärtsbewegung auf die zwischen den Schwenkachsen 29,30 liegenden Bereiche mit den Viergelenken 21,22,23 und 24 ausgeübt wird, um damit die zur Verfügung stehende Breite für die Insassen bei geöffnetem Verdeck 2 zu vergrößern. Um diese zusätzliche Querbewegungskomponente abfangen zu können, ist das Zug- und Schubglied 14 auf den Achsstummeln 16 über schwenkbare Gelenklager gehalten.

## Patentansprüche

1. Cabriolet-Fahrzeug (1) mit einem faltbaren, zumindest bereichsweise flexiblen Dach (2), wobei zur Abstützung zumindest des flexiblen Dachbereichs seitliche Längsträgerteile (5;6) und sich zwischen diesen erstreckende Querverbindungsträger (7;8;9;10), sogenannte Spriegel, angeordnet sind, **dadurch gekennzeichnet, daß** zumindest ein Spriegel (7) gegenüber den ihn tragenden seitlichen Längsträgern (5;6) längsverschieblich angeordnet ist und zur Bewirkung der Längsverschiebung des Spriegels (7) zumindest ein Steuerungsmittel (14) vorgesehen ist, das in Abhängigkeit des Öffnungs- bzw. Schließzustandes des Daches (2) wirksam ist.

2. Cabriolet-Fahrzeug nach Anspruch 1, **dadurch gekennzeichnet, daß** als Steuerungsmittel (14) eine Zug- und Schubstange vorgesehen ist.

3. Cabriolet-Fahrzeug nach Anspruch 2, **dadurch gekennzeichnet, daß** die Zug- und Schubstange (14) sich im wesentlichen parallel zu den Längsträgerteilen (5;6) erstreckt und ein dem Spriegel (7) zugeordnetes Ende (15) sowie ein gegenüberliegendes, an einem während der Öffnung bzw. des Schließens des Daches bewegten Mehrgelenks (21;22;23;24) angeordnetes Ende aufweist.

4. Cabriolet-Fahrzeug nach einem der Ansprüche 1 bis 3, **dadurch gekennzeichnet, daß** der erste Spriegel (7) hinter einem vorderen, der Windschutzscheibe zugewandten Dachquerabschluß (13) längsverschieblich ist und bei geschlossenem Dach (2) in einer hinteren Endposition befindlich und während der Dachöffnung gegenüber den seitlichen Längsführungsteilen (5;6) in Richtung des vorderen Dachquerabschlusses (13) verschiebbar ist.

5. Cabriolet-Fahrzeug nach einem der Ansprüche 1 bis 4, **dadurch gekennzeichnet, daß** den Längsträgerteilen (5;6) sich im wesentlichen parallel zu ihrer Erstreckung verlaufende Führungskulissen (17) zugeordnet sind, in denen der verschiebliche Spriegel (7) über Achsstummel (16) gelagert ist, wobei das dem Spriegel (7) zugeordnete Ende (15) der Zug- und Schubstange (14) ebenfalls auf diesen Achsstummeln (16) gelagert ist.

6. Cabriolet-Fahrzeug nach Anspruch 5, **dadurch gekennzeichnet, daß** die Lagerung der Zug- und Schubstange (14) auf den Achsstummeln (16) über ein Kugelgelenk bewirkt ist.

## Claims

1. Convertible vehicle (1) having a foldable roof (2) which is flexible at least in a region or regions, with lateral longitudinal support parts (5, 6), and transverse connecting supports (7, 8, 9, 10), so-called bows, extending between the latter, being arranged for the support of at least the flexible region of the roof, **characterised in that** at least one bow (7) is arranged to be longitudinally displaceable relative to the lateral longitudinal supports (5, 6) carrying it, and at least one control means (14) is provided to cause the longitudinal displacement of the bow (7), which control means (14) operates as a function of the state of lowering or raising of the roof (2).

2. Convertible vehicle according to claim 1, **characterised in that** what is provided as the control means (14) is a traction and thrust bar.

3. Convertible vehicle according to claim 2, **characterised in that** the traction and thrust bar (14) extends substantially parallel to the longitudinal support parts (5, 6) and has an end (15) associated with the bow (7) and an opposite end which is arranged on a multiple linkage (21, 22, 23, 24) which moves during the lowering or raising of the roof.

4. Convertible vehicle according to one of claims 1 to 3, **characterised in that** the first bow (7) is longitudinally displaceable to the rear of a front transverse roof termination (13) adjacent the windscreen and is situated in a rear end position when the roof (2) is raised and is displaceable relative to the lateral longitudinal guiding parts (5, 6) in the direction of the front transverse roof termination during the lowering of the roof.

5. Convertible vehicle according to one of claims 1 to 4, **characterised in that** the longitudinal support parts (5, 6) have associated with them guiding slideways (17) which extend substantially parallel to the longitudinal extent of the longitudinal support parts (5, 6) and in which the displaceable bow (7) is mounted by means of spigots (16), that end (15) of the traction and thrust bar (14) which is associated with the bow (7) also being mounted on these spigots (16).

6. Convertible vehicle according to claim 5, **characterised in that** the mounting of the traction and thrust bar (14) on the spigots (16) is by means of a ball joint.

## Revendications

1. Véhicule convertible (1) avec au moins un toit ouvrant (2) repliable ayant des régions flexibles, des pièces latérales de longeron (5 ; 6) étant agencées pour soutenir au moins la région de toit flexible et des joints perpendiculaires (7 ; 8 ; 9 ; 10), appelés arceaux, s'étendant entre ces pièces,
**caractérisé en ce qu'**
au moins un arceau (7) est installé avec possibilité déplacement longitudinal par rapport aux longerons latéraux (5 ; 6) le supportant, et au moins un moyen de commande (14) efficace en fonction de l'état d'ouverture et/ou de fermeture du toit (2) est prévu pour effectuer le déplacement longitudinal de l'arceau (7).

2. Véhicule convertible selon la revendication 1,
**caractérisé en ce qu'**
le moyen de commande (14) est une barre de traction et de poussée.

3. Véhicule convertible selon la revendication 2,
**caractérisé en ce que**
la barre de traction et de poussée (14) est essentiellement parallèle aux pièces de longeron (5 ; 6), et présente une extrémité (15) associée à l'arceau (7) ainsi qu'une extrémité opposée sur une articulation multiple (21 ; 22 ; 23 ; 24) déplacée pendant l'ouverture et/ou la fermeture du toit.

4. Véhicule convertible selon l'une quelconque des revendications 1 à 3,
**caractérisé en ce que**
le premier arceau (7) peut être déplacé longitudinalement derrière une fermeture transversale avant du toit (13) tournée vers le pare-brise, il se trouve dans une position extrême arrière lorsque le toit (2) est fermé et peut être déplacé pendant l'ouverture du toit par rapport aux pièces latérales de longeron (5 ; 6) en direction de la fermeture transversale avant du toit (13).

5. Véhicule convertible selon l'une quelconque des revendications 1 à 4,
**caractérisé en ce que**
des coulisses de guidage (17) essentiellement parallèle à leur extension logent l'arceau (7) mobile par des fusées (16) dans des paliers et sont associées aux pièces de longeron (5 ; 6), l'extrémité (15) associée à l'arceau (7) de la barre de traction et de poussée (14) étant montée par des paliers sur ces fusées (16).

6. Véhicule convertible selon la revendication 5,
**caractérisé en ce que**
le positionnement de la barre de traction et de poussée (14) agit sur les fusées (16) par un joint sphérique.
